# EUROPEAN PATENT APPLICATION

(11) **EP 3 412 375 A1**
(43) Date of publication of application: **12.12.2018**
(21) Application number: 16889424.4
(22) Date of filing: 15.12.2016
(51) Int. Cl.: B21J 5/08, B21J 5/02, B21K 1/10, F16C 3/02

(54) **HOLLOW TUBE MATERIAL MANUFACTURING METHOD**

(30) Priority: 05.02.2016 JP 2016021153
(71) Applicant: Nippon Steel & Sumitomo Metal Corporation, Tokyo 100-8071 (JP)
(72) Inventor: YOSHIDA, Hiroshi, Tokyo 100-8071 (JP); MIZUMURA, Masaaki, Tokyo 100-8071 (JP); MORI, Yasunori, Tokyo 100-8071 (JP); KUBOTA, Hiroaki, Tokyo 100-8071 (JP)
(74) Representative: Vossius & Partner Patentanwälte Rechtsanwälte mbB
(86) International application number: PCT/JP2016/087396
(87) International publication number: WO 2017/134941

(57) **Abstract**

A method for manufacturing a tubular member has: a step of disposing a steel pipe which is a material in an outer die having an inner surface having the same shape as an outer form of the tubular member with at least a part of the steel pipe being separated from the inner surface; and a step of compressing the steel pipe in the axial direction by decreasing a relative distance between a pair of pressurizing dies that respectively abut both end surfaces of the steel pipe in the axial direction in a state where a core die portion having an outer surface shape that is the same as inner surface shapes of the both end portions of the tubular member in the axial direction is inserted between the pair of pressurizing dies with at least a part of the core die portion being separated from the inner surface of the steel pipe.

## Description

### [Technical Field of the Invention]

The present invention relates to a method for manufacturing a tubular member. Priority is claimed on Japanese Patent Application No. 2016-021153, filed on February 5, 2016, the content of which is incorporated herein by reference.

### [Related Art]

Currently, in the viewpoint of global environmental protection, there is a demand for the weight reduction of automobiles. For example, thinning of sheet thickness by increasing the tensile force of steel sheets constituting vehicle bodies and the weight reduction of a variety of in-vehicle components are strongly promoted. Therefore, the manufacturing costs of automobiles tend to increase, and there is a demand for further reducing the costs of a variety of in-vehicle components.

For example, in drive shafts for transmitting a driving force output from an engine through a transmission to tires, propeller shafts for transmitting the output of an engine mounted in the vehicle body front side to rear wheels that are driving wheels, and furthermore, automobile power transmission system shafts which are connected to right and left drive shafts and prevent torque steer, weight reduction by emptying solid components of the related art has already been put into practical use.

In the above-described tubular power transmission system shafts, there are many cases in which the outer diameter and the inner diameter vary at individual locations along the axial direction, and thus far, the tubular power transmission system shafts have been manufactured using manufacturing methods listed below.

### (a) Manufacturing Method Using Friction Pressure Welding

In this method, when a power transmission system shaft having a shape in which the outer diameter and the inner diameter vary along the axial direction is manufactured, a shaft-direction center portion and shaft-direction both end portions are separately manufactured, and the portions are joined together by means of friction pressure welding. In this method, the shaft-direction center portion is manufactured by cutting a steel pipe, and the shaft-direction both end portions are manufactured by machining a forged product.

### (b) Manufacturing Method Using Rotary Swaging

In this method, a tubular power transmission system shaft is manufactured by: preparing a steel pipe having a constant thickness along the axial direction; and thinning, decreasing the diameters, and thickening of both end portions, by means of rotary swaging. Patent Document 1 discloses an invention for manufacturing a tubular propeller shaft or a tubular drive shaft using this method.

### [Prior Art Document]

### [Patent Document]

[Patent Document 1] Japanese Unexamined Patent Application, First Publication No. 2011-121068

### [Disclosure of the Invention]

### [Problems to be Solved by the Invention]

According to the manufacturing method using friction pressure welding, the shaft-direction center portion of the product can be thinned, and thus it is possible to reliably reduce the weight of the power transmission system shaft. However, a step of joining the shaft-direction center portion and the shaft-direction both end portions is required, and thus, inevitably, the manufacturing cost increases. In addition, it is also necessary to strictly manage the quality of the joint portions, which also further increases the manufacturing cost.

In addition, in the manufacturing method using rotary swaging, a facility for carrying out the method is extremely expensive, and the processing time by this manufacturing method becomes inevitably long, and thus, the manufacturing cost increases.

As described above, in the related art, it is difficult to manufacture, for example, drive shafts, propeller shafts, and, furthermore, tubular power transmission system shafts (tubular members) that are connected to right and left drive shafts at a low cost.

An object of the present invention is to provide a method for manufacturing a tubular member having a cross-sectional shape that varies along the axial direction at a low cost.

### [Means for Solving the Problem]

As a result of repeating intensive studies for achieving the above-described object, the present inventors found that a tubular member having a cross-sectional shape that varies along the axial direction can be manufactured at a low cost by employing the following steps (A) and (B), further repeated studies, and completed the present invention.
(A) A steel pipe which is a material is disposed in an outer die having an inner surface shape that is the same shape of the outer form of a product to be manufactured.
(B) The steel pipe is compressed in the axial direction between a pair of dies each having a base portion capable of pressing each of both end portions of the steel pipe in the axial direction toward the shaft-direction central location of the steel pipe and a core die portion which is provided in the base portion and has an outer surface shape that is the same shape as the inner surface shapes of the shaft-direction both end portions of the product.

That is, the present invention employed aspects listed below.
(1) An aspect of the present invention is a method for manufacturing a tubular member having thickened portions, swollen portions having a larger outer diameter than the thickened portions, and a center portion having a smaller outer diameter than the swollen portions from both end portions in an axial direction toward a central location in the axial direction, the method including: a step of disposing a steel pipe which is a material in an outer die having an inner surface having the same shape as an outer form of the tubular member with at least a part of the steel pipe being separated from the inner surface; and a step of compressing the steel pipe in the axial direction by decreasing a relative distance between a pair of pressurizing dies that respectively abut both end surfaces of the steel pipe in the axial direction in a state where a core die portion having an outer surface shape that is the same as inner surface shapes of the both end portions of the tubular member in the axial direction is inserted between the pair of pressurizing dies with at least a part of the core die portion being separated from the inner surface of the steel pipe.
(2) In the above (1), the core die portion may have an outer diameter that decreases toward a front end thereof.
(3) In the case of the above (2), the outer diameter of the core die portion may vary stepwise or continuously in synchronization with thicknesses of the thickened portions.
(4) In any one of the above (1) to (3), abutting portions with the both end surfaces of the steel pipe in the axial direction of the pair of pressurizing dies may be inclined toward an outside of the steel pipe.
(5) In any one of the above (1) to (4), the tubular member may be an automobile power transmission system shaft.
(6) In the case of the above (5), the power transmission system shaft may be a drive shaft, a propeller shaft, or a power transmission system shaft that is connected to right and left drive shafts.

### [Effects of the Invention]

According to the method for manufacturing a tubular member described in the above-described aspect, it is possible to provide a tubular member that is preferably used as, for example, a drive shaft, a propeller shaft, and furthermore a tubular power transmission system shaft that is connected to right and left drive shafts.

### [Brief Description of the Drawings]

FIG. 1 is cross-sectional views illustrating a method for manufacturing a tubular member according to an embodiment of the present invention, FIG. 1(a) illustrates an appearance before forge processing, and FIG. 1(b) illustrates an appearance after the forge processing.
FIG. 2 is cross-sectional views for describing individual dimensions of the tubular member that is processed using the method for manufacturing a tubular member according to the same embodiment, FIG. 2(a) illustrates dimensions of a steel pipe that serves as a processing material, and FIG. 2(b) illustrates dimensions of a power transmission system shaft after the forge processing.
FIG. 3 is cross-sectional views illustrating a modification example of the same embodiment, FIG. 3(a) corresponds to FIG. 1(a), and FIG. 3(b) corresponds to FIG. 1(b).
FIG. 4 is a view for illustrating a tapered angle α of a core die portion that is used in the same modification example and is a cross-sectional view seen on a cross section including a center line.

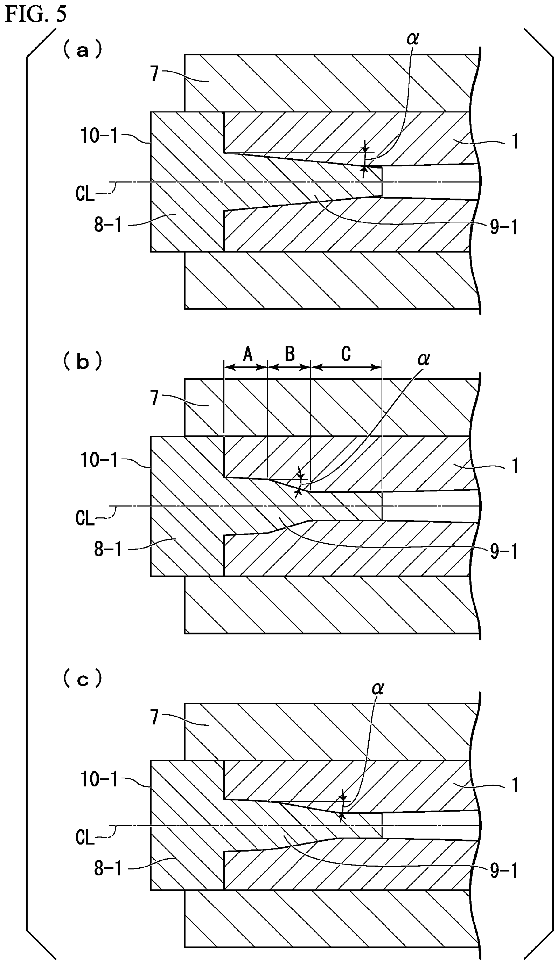

FIG. 5 is cross-sectional views of the tubular member and the core die portion seen on a cross section including the center line thereof, FIG. 5(a) illustrates an appearance after the completion of forming using the core die portion having a tapered angle that is constant along the center line, FIG. 5(b) illustrates an appearance after the completion of forming using the core die portion having a tapered angle that varies stepwise along the center line, and furthermore, FIG. 5(c) illustrates an appearance after the completion of forming using the core die portion having a tapered angle that varies continuously along the center line.
FIG. 6 is cross-sectional views illustrating another modification example of the embodiment illustrated in FIG. 1, FIG. 6(a) corresponds to FIG. 1(a), and FIG. 6(b) corresponds to FIG. 1(b).
FIG. 7 is views illustrating a process of forge processing in the same modification example, FIG. 7(a) is an enlarged cross-sectional view of a portion corresponding to an A1 portion in FIG. 6(a), and FIG. 7(b) is an enlarged cross-sectional view of a portion corresponding to an A2 portion in FIG. 6(b).
FIG. 8 is cross-sectional views illustrating still another modification example of the embodiment illustrated in FIG. 1, FIG 8(a) corresponds to FIG 1(a), and FIG. 8(b) corresponds to FIG. 1(b).
FIG. 9 is a cross-sectional view illustrating still another modification example of the embodiment illustrated in FIG. 1 and is an enlarged cross-sectional view of a portion corresponding to an A3 portion in FIG. 1(b).

### [Embodiments of the Invention]

A method for manufacturing a tubular member according to an embodiment of the present invention will be described below with reference to the accompanying drawings. Moreover, in the following description, a case in which a tubular member is a tubular power transmission system shaft for an automobile will be exemplified for description, but the present invention is also applicable to tubular members other than the power transmission system shaft in the same manner.

### 1. Tubular Power Transmission System Shaft for Automobile 1

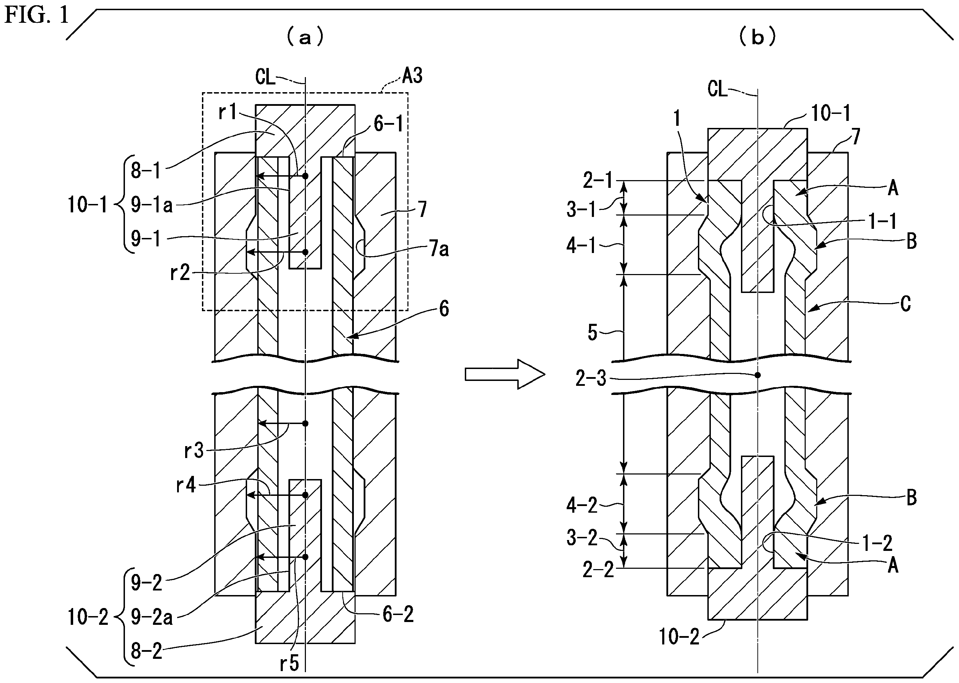

FIG. 1 is cross-sectional views illustrating the method for manufacturing a tubular member according to the embodiment of the present invention, FIG 1(a) illustrates an appearance before forge processing, and FIG. 1(b) illustrates an appearance after the forge processing.

As illustrated in FIG. 1(b), in the present embodiment, a tubular power transmission system shaft for an automobile 1 is manufactured using one step of cold forging processing.

The power transmission system shaft 1 has thickened portions 3-1 and 3-2, swollen portions 4-1 and 4-2, and a center portion 5 from both end locations 2-1 and 2-2 in a direction along a center line CL (hereinafter, referred to as the axial direction) toward a central location 2-3 in the axial direction. That is, as illustrated in FIG 1(b), in the power transmission system shaft 1, the thickened portion 3-1, the swollen portion 4-1, the center portion 5, the swollen portion 4-2, and the thickened portion 3-2 are continuously formed in this order.

The thickened portions 3-1 and 3-2 are portions having the thickest thickness among the thickened portions 3-1 and 3-2, the swollen portions 4-1 and 4-2, and the center portion 5. In the the present embodiment, the thicknesses of the thickened portions 3-1 and 3-2 are substantially constant at individual location of the power transmission system shaft 1 in the axial direction. The outer diameters of the thickened portions 3-1 and 3-2 are substantially constant at individual location of the power transmission system shaft 1 in the axial direction, and are almost the same as the outer diameter of a steel pipe 6 which is a material. In addition, the inner diameters of the thickened portions 3-1 and 3-2 are substantially constant at individual location of the power transmission system shaft 1 in the axial direction, and are smaller than the inner diameter of the steel pipe 6.

In the case where the power transmission system shaft 1 is a tubular power transmission system shaft which is connected to right and left drive shafts, splines are carved on the outer surfaces of the thickened portions 3-1 and 3-2.

The swollen portions 4-1 and 4-2 are portions having an outer diameter that is larger than those of the thickened portions 3-1 and 3-2 and a thickness that is smaller than those of the thickened portions 3-1 and 3-2. The outer diameters of the swollen portions 4-1 and 4-2 gradually increase from the outer diameters of the thickened portions 3-1 and 3-2, reach the maximum value at the substantially central locations of the swollen portions 4-1 and 4-2 in the axial direction, and then gradually decrease toward the center portion 5. In addition, the inner diameters of the swollen portions 4-1 and 4-2 also gradually increase from the inner diameters of the thickened portions 3-1 and 3-2, reach the maximum value at the substantially central locations of the swollen portions 4-1 and 4-2 in the axial direction, and then gradually decrease toward the center portion 5.

The center portion 5 has an outer diameter that is smaller than those of the swollen portions 4-1 and 4-2 on both sides thereof. Furthermore, the outer diameter of the center portion 5 is substantially constant at individual location of the power transmission system shaft 1 in the axial direction and substantially coincides with the outer diameter of the steel pipe 6 which is the material.

In addition, the inner diameter of center portion 5 is substantially constant at individual location of the power transmission system shaft 1 in the axial direction and substantially coincides with the inner diameter of the steel pipe 6. Therefore, the inner diameter of the center portion 5 is larger than the inner diameters of the thickened portions 3-1 and 3-2.

Therefore, the center portion 5 has a diameter and a thickness that are not increased, and thus the thickness of the center portion 5 is almost the same as the thickness of the steel pipe 6 and substantially constant at individual locations of the power transmission system shaft 1 in the axial direction.

The hardness of the center portion 5 substantially coincides with the hardness of the steel pipe 6 which is the material and rarely varies before and after forge processing.

Meanwhile, the thickened portions 3-1 and 3-2 have been thickened by forge processing and are thus work-hardened and becomes harder than the hardness at the time of the steel pipe 6. In addition, the swollen portions 4-1 and 4-2 are also processed to increase a diameter thereof by forge processing, and are thus work-hardened and become harder than the hardness at the time of the steel pipe 6.

The thickened portions 3-1 and 3-2 and the swollen portions 4-1 and 4-2 are respectively work-hardened as described above, and thus, in the power transmission system shaft 1, a characteristic demanded for automobile power transmission system shafts as basic performance such as torsion strength or torsion fatigue can be sufficiently improved.

As a material of the power transmission system shaft 1, S45CB softening material (tensile strength TS=550 MPa) is exemplified, but the material is not limited only to this material. In the power transmission system shaft 1, since thickening and pipe expansion are carried out by means of axial pressing through forge processing, processing-induced deformation is mainly compressive deformation, and the amount of tensile deformation is small. Therefore, the risk of fracture by the high-strengthening of the material is extremely low. Therefore, as the material of the power transmission system shaft 1, materials having a lower strength than S45CB softening material are also applicable. Furthermore, even when a material having a higher strength than S45CB softening material is applied, it is also possible to form the power transmission system shaft 1 without causing fracture.

In materials having a higher strength than S45CB softening material, the axial pressing load increases in proportion to an increase in the strength of the materials. However, the axial pressing load is approximately 350 ton even for S35CB softening material and is thus merely approximately 700 ton even for materials having a high strength of 1,000 MPa, and the power transmission system shaft can still be sufficiently manufactured using a mass production pressing machine.

### 2. Method for Manufacturing Power Transmission System Shaft I

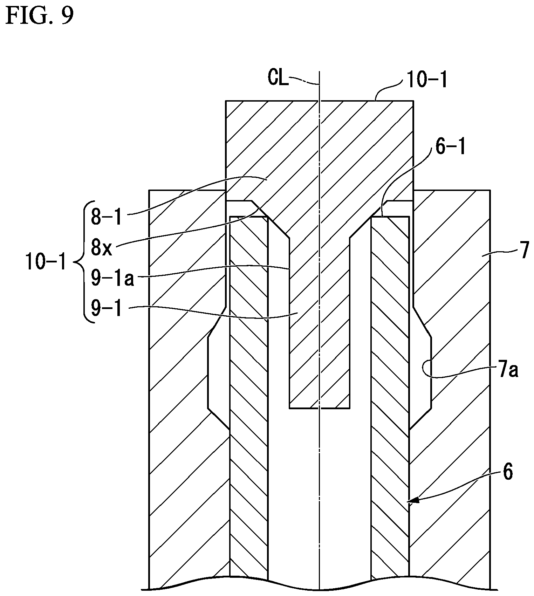

First, as illustrated in FIG. 1(a), the steel pipe 6 having a constant thickness which is the material is disposed in an outer die 7 having an inner surface shape 7a that is the same shape as the outer form of the power transmission system shaft 1 slightly separated from the inner surface of the outer die 7. That is, the steel pipe is disposed so that the center line of the inner surface (inner surface shape 7a) and the center line of the steel pipe 6 become the same axis (center line CL). A gap is provided between the outer surface of the steel pipe 6 and the inner surface of the outer die 7, but the dimension of the gap is small. Furthermore, base portions 8-1 and 8-2 described below have a substantially cylindrical shape having an outer diameter that substantially coincides with the end portion inner diameter of the inner surface shape 7a of the outer die 7. Therefore, the steel pipe can be disposed along substantially the same axis by normally putting the steel pipe 6 and the base portions 8-1 and 8-2 into the outer die 7. In a case where the steel pipe 6 needs to be disposed along the same axis at a higher accuracy, it is also possible to employ a configuration described below using FIG. 9.

The detail of the inner surface shape 7a will be described. In a view seen along the axial direction of the outer die 7, in a region corresponding to the thickened portion 3-1, the distance from the center line CL is as constant as r1 as illustrated in FIG 1(a).

Subsequently, in a region corresponding to the swollen portion 4-1, a distance r2 from the center line CL is the same as the distance r1 in the thickened portion 3-1 at one end portion thereof, but gradually increases toward the center portion 5, reaches the maximum value, and then gradually decreases toward the other end portion.

Subsequently, a distance r3 in a region corresponding to the center portion 5 is the same as the distance r2 at the other end portion and is constant along the center line CL up to the swollen portion 4-2.

Subsequently, in a region corresponding to the swollen portion 4-2, a distance r4 from the center line CL is the same as the distance r3 at one end portion, but gradually increases toward the thickened portion 3-2, reaches the maximum value, and then gradually decreases toward the other end portion.

Subsequently, in a region corresponding to the thickened portion 3-2, the distance from the center line CL is as constant as r5 and is the same as the distance r4 at the above-mentioned other end portion.

Meanwhile, the distance r1 and the distance r5 are the same with each other.

A gap is provided between the outer surface of the steel pipe 6 and the inner surface shape 7a of the outer die 7. The dimension of the gap is not constant in a view seen along the direction of the center line CL and is varied depending on the purposes.

Specifically, in an A-portion (the thickened portions 3-1 and 3-2) of FIG. 1(b), the gap dimension is determined depending on two purposes of: the smooth passing of the steel pipe 6 through the outer die 7 during the insertion of the steel pipe thereinto (purpose 1); and the smooth flow of a material by suppressing friction between the steel pipe 6 deformed in the outer die 7 by die forging and the outer die 7 (purpose 2). Meanwhile, in order to achieve only the two purposes described above, it may be considered to simply increase in the size of the gap; however, in such a case, it is not possible to restrain deformation in which the steel pipe 6 becomes excessively larger to the outside in the radial direction with peripheral portions around the steel pipe, and thus there is a concern that the buckling deformation of the steel pipe 6 may be caused. Therefore, the gap is positively provided, but the dimension thereof is specified so as to prevent the gap from being excessively large.

In addition, in a B-portion (the swollen portions 4-1 and 4-2) of FIG. 1(b), in order to increase the outer diameter of the steel pipe 6, a larger gap dimension is employed.

In addition, in a C-portion (the center portion 5) of FIG. 1(b), neither the diameter nor the thickness are increased, and thus the minimum gap dimension is employed only for the purpose of smoothly passing the steel pipe 6 through the outer die 7 during the insertion of the steel pipe thereinto. In the C-portion, it is preferable to reduce the gap as much as possible.

For the gap dimensions in the respective portions of the A-portion to the C-portion of FIG. 1(b), it is preferable to respectively set the upper limit values and the lower limit values in consideration of the above-described reasons.

First, the lower limit value of the gap in the A-portion will be described. In a case in which the outer diameter of the steel pipe 6, which is a raw pipe before processing, in the axial direction at an any location is set to d1 (mm), a gap W1 (mm) between the inner surface of the outer die 7 and the outer surface of the steel pipe 6 in the radial direction of the steel pipe 6 is desirably set to 0.0 1 x d 1 or larger from the viewpoint of the above-mentioned purpose 1. Subsequently, the upper limit value of the gap in the A-portion will be described. W1 is desirably set to 0.05 x d1 or smaller from the viewpoint of the above-mentioned purpose 2. Accordingly, in the A-portion, the gap W1 (mm) is preferably determined so as to be within a range specified by an expression of 0.01 x d1 ≤ W1 ≤ 0.05 x d1.

Subsequently, regarding the gap in the B-portion, the gap W1 (mm) is preferably determined so as to be within a range specified by an expression of 0.10 x d1 ≤ W1 ≤ 0.25 x d1.

Meanwhile, in the center portion 5, the steel pipe 6 simply needs to be passed through the outer die 7, and the gap W1 (mm) is preferably set to approximately zero millimeters.

Meanwhile, while not illustrated, the outer die 7 is provided with a two (right and left)-block structure like dies that are used in ordinary die forging and is constituted so that formed products can be easily removed by dividing the outer die into two blocks. That is, the outer die 7 is constituted of a pair of dies that are divided into two blocks by division surfaces having a shape illustrated in FIG. 1(b), and thus, even when the formed power transmission system shaft 1 has the swollen portions 4-1 and 4-2, the power transmission system shaft 1 can be removed from the inside of the outer die 7 by dividing the pair of dies into two blocks.

Next, die forging is performed in which both end surfaces 6-1 and 6-2 of the steel pipe 6 in the axial direction are compressed in the axial direction between a pair of the upper and lower dies (core die portion-mounted punches) 10-1 and 10-2 as illustrated in FIG. 1(a). The die 10-1 has the base portion 8-1 and a core die portion 9-1. The die 10-2 has the base portion 8-2 and a core die portion 9-2.

The base portions 8-1 and 8-2 press the steel pipe 6 toward the center in the axial direction from both ends thereof. The base portions 8-1 and 8-2 have a substantially cylindrical shape having an outer diameter that substantially coincides with the end portion inner diameter of the inner surface shape 7a of the outer die 7 and can be inserted into or removed from the end portions of the outer die 7.

The core die portions 9-1 and 9-2 are provided concentrically and integrally with the base portions 8-1 and 8-2 and have outer surface shapes 9-1a and 9-2a that are the same shape as the inner surface shapes 1-1 and 1-2 (that is, the same shape as the inner surfaces of the thickened portions 3-1 and 3-2) of the both end portions of the power transmission system shaft 1 in the axial direction. A gap W2 (mm) between the outer surface of the core die portions 9-1 and 9-2 and the inner surface of the steel pipe 6 before forge processing can be appropriately set from a range of 0.10 x (d2 - 2 x t) ≤ W2 ≤ 0.25 x (d2 - 2 x t) in a case in which the inner diameter of the steel pipe 6 is represented by d2 (mm) and the thickness is represented by t (mm).

During the die forging, in the A-portion in FIG. 1(b), the thickened portions 3-1 and 3-2 are formed by axial pressing using the dies 10-1 and 10-2. In detail, as illustrated in FIG. 1(a), a gap is provided between the outer surfaces of the core die portions 9-1 and 9-2 and the inner surface of the steel pipe 6 before the axial pressing is carried out using the base portions 8-1 and 8-2. In addition, during compression using the base portions 8-1 and 8-2, the inner diameter of a portion being thickened decreases, and the thickness increases, and finally, the thickened portions 3-1 and 3-2 having an inner shape of a final product which coincides with the outer surfaces of the core die portions 9-1 and 9-2 are obtained.

In addition, in the B-portion in FIG. 1(b), the periphery of the steel pipe 6 is not restrained before the axial pressing as illustrated in FIG. 1 (a). Therefore, in the B-portion, the axial pressing rarely carries out thickening but expands the pipe, thereby forming the swollen portions 4-1 and 4-2. The maximum outer diameter dimensions of the swollen portions 4-1 and 4-2 are increased to approximately 1.2 to 1.5 times the outer form dimension of the steel pipe 6 before the forge processing.

In the C-portion in FIG 1(b), neither pipe expansion nor thickening is carried out.

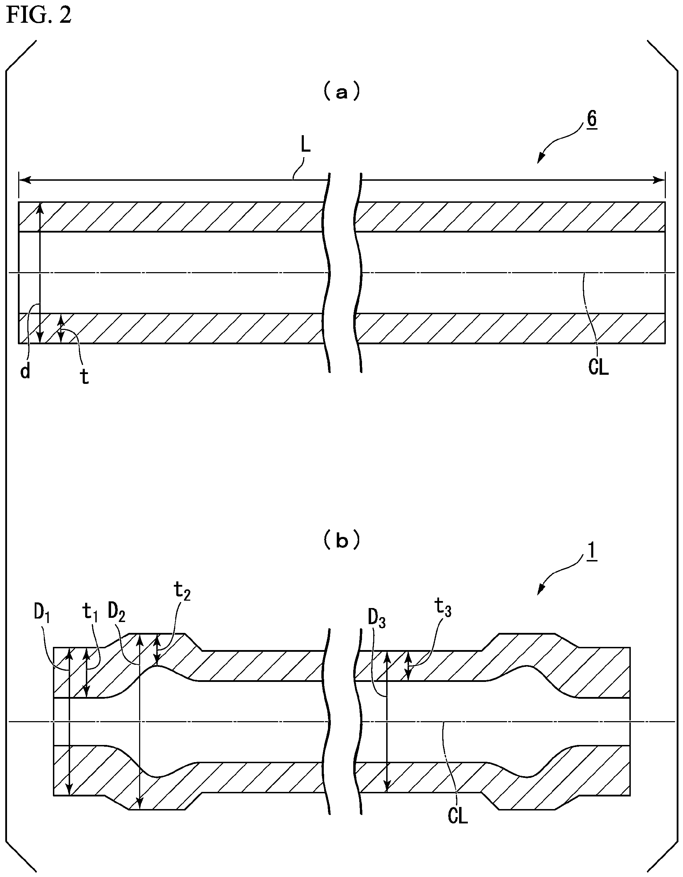

FIG. 2 is cross-sectional views for describing individual dimensions of a tubular member that is processed using the method for manufacturing a tubular member according to the present embodiment. FIG. 2(a) illustrates the dimensions at each position of the steel pipe 6 that serves as a processing material, and FIG. 2(b) illustrates the dimensions at each position of the power transmission system shaft 1 after processing.

In a case in which S45CB softening material (tensile strength TS=550 MPa class) is used as the material of the steel pipe 6, it is possible to preferably employ a softening material that has a total length L of 100 mm to 2,000 mm, an outer diameter d of 20 mm to 100 mm, a sheet thickness t of 2 mm to 20 mm, and t ≤ d/2.

The power transmission system shaft 1 exemplified in FIG. 2(b) satisfies the following condition 1 regarding the thicknesses at each portions and the following condition 2 regarding the outer diameters at each portions.
Condition 1: t₁ > t₂, t₁ > t₃, and t₁, t₂, and t₃ are respectively 4 mm or more and 15 mm or less.
Condition 2: D₂ > D₁, D₂> D₃, 20 mm < D₁ < 100 mm, 22 mm < D₂ < 125 mm, 20 mm < D₃ < 100 mm are all satisfied.

Furthermore, regarding a shaft-direction length L (mm) of the steel pipe 6, the following condition 3 is desirably satisfied as described above.
Condition 3: 100 mm ≤ L ≤ 2,000 mm

After the die forging, the dies 10-1 and 10-2 are removed from the formed power transmission system shaft 1, the outer die 7 is divided into two (right and left) blocks, and the power transmission system shaft 1 is removed. As mentioned in the above, the tubular power transmission system shaft 1 is manufactured using a single step of die forging.

Meanwhile, regarding the order of removing the power transmission system shaft 1 from the die after the die forging, opposite to the above-described order, the outer die 7 may be first divided into two blocks so as to remove the power transmission system shaft 1, and then the dies 10-1 and 10-2 may be removed from the power transmission system shaft 1. However, the order of removing the dies 10-1 and 10-2 from the power transmission system shaft 1 before removing the power transmission system shaft 1 by dividing the outer die 7 into two blocks as described above is more preferred. The reason therefor is that, during the removal of the dies 10-1 and 10-2 from the power transmission system shaft 1, the swollen portions 4-1 and 4-2 of the power transmission system shaft 1 are locked to recessed parts formed in the inner surface shape 7a, and thus it is possible to easily remove the dies 10-1 and 10-2 by gripping the outer die 7. That is, since the dies 10-1 and 10-2 can be removed without directly gripping the power transmission system shaft 1, there is no concern that the power transmission system shaft 1 may be scratched.

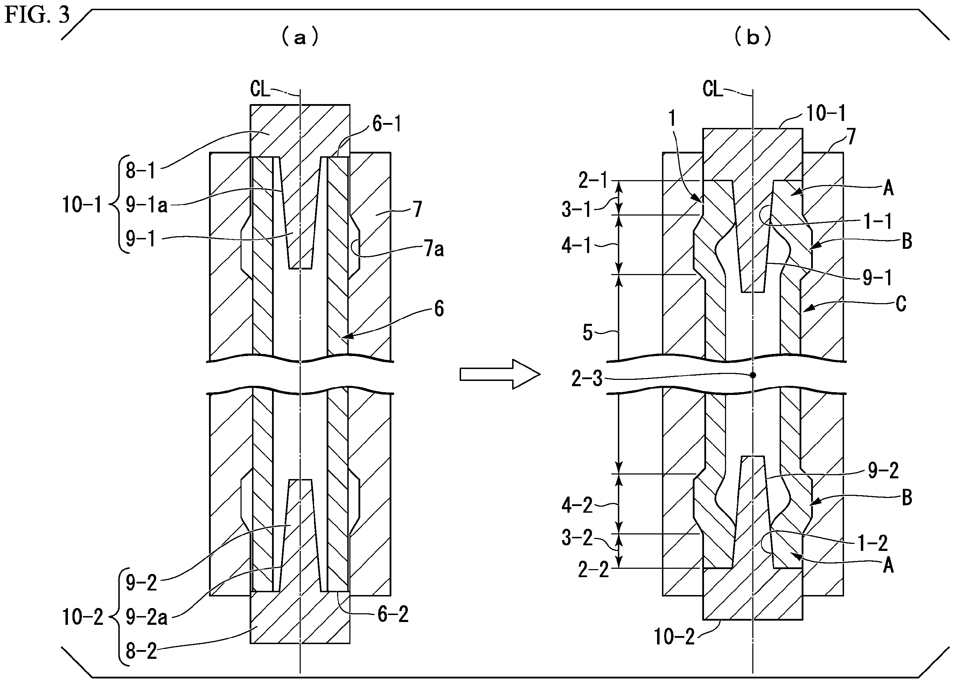

FIG. 3 is cross-sectional views illustrating a modification example of the pair of dies 10-1 and 10-2 in the embodiment, FIG. 3(a) corresponds to FIG. 1(a), and FIG. 3(b) corresponds to FIG. 1(b).

In order to decrease the load for removing the dies 10-1 and 10-2 from the tubular power transmission system shaft 1 formed by the die forging, the core die portions 9-1 and 9-2 in the dies 10-1 and 10-2 desirably have a tapered shape having an outer diameter that gradually decreases toward the front end thereof as illustrated in FIG 3(a) and FIG. 3(b).

Particularly, in order to obtain a desired thickness distribution in the thickened portions 3-1 and 3-2 which are pipe end portions, the outer diameters of the core die portions 9-1 and 9-2 desirably vary stepwise or continuously in synchronization with the thicknesses of the thickened portions 3-1 and 3-2. More specifically, in a case in which a taper shape is provided to the core die portions 9-1 and 9-2, the thicknesses of the thickened portions 3-1 and 3-2 smoothly increase from the pipe ends toward the swollen portions 4-1 and 4-2. As a result, it is possible to maximize the thicknesses at places in which the thickened portions 3-1 and 3-2 are switched to the swollen portions 4-1 and 4-2, and thus the mechanical strength of the switching portion having the above-described shape can be increased, and it becomes possible to obtain the superior power transmission system shaft 1.

Additionally, in a case in which a taper shape is provided to the core die portions 9-1 and 9-2, there is another advantage that the dies 10-1 and 10-2 can be more easily removed after the die forging.

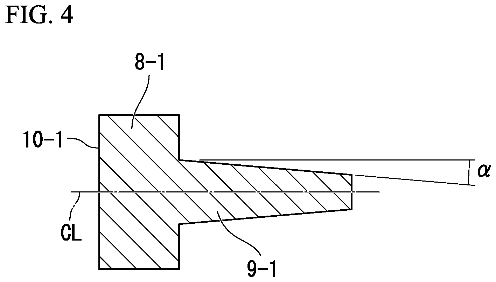

FIG. 4 is a cross-sectional view for illustrating a tapered angle α of the core die portion 9-1 that is used in the above-described modification example. In addition, FIG 5 is cross-sectional views of the steel pipe 6 and the core die portion 9-1 in a view seen on a cross section including the center line CL thereof. FIG 5(a) illustrates an appearance after the completion of forming using the core die portion 9-1 having a constant tapered angle, FIG. 5(b) illustrates an appearance after the completion of forming using the core die portion 9-1 having a tapered angle that varies stepwise, and furthermore, FIG. 5(c) illustrates an appearance after the completion of forming using the core die portion 9-1 having a tapered angle that varies continuously. Meanwhile, in FIG. 5(a) to FIG. 5(c), the swollen portion 4-1 is not illustrated for description.

The tapered angle α of the core die portion 9-1 illustrated in FIG. 4 is preferably 0.3° or more and 10.0° or less. The tapered angle α mentioned herein refers to an inclination angle with respect to a straight line parallel to the center line CL.

The core die portion 9-1 illustrated in FIG. 5(a) has the same shape as that of the core die portion 9-1 illustrated in FIG. 3(a) and FIG. 3(b).

Meanwhile, in the case of using the die 10-1 having the core die portion 9-1 illustrated in FIG. 5(b), it is possible to vary the thickness of the power transmission system shaft 1 to be manufactured stepwise. In the core die portion 9-1 illustrated in FIG. 5(b), the tapered angle α illustrated in FIG. 4 is varied three steps in the A-portion, the B-portion, and the C-portion. The respective tapered angles α from the A-portion to C-portion may be appropriately combined together in a range of 0.3° or more and 10.0° or less.

Furthermore, in the case of using the die 10-1 having the core die portion 9-1 illustrated in FIG. 5(c), it is possible to vary the thickness of the power transmission system shaft 1 to be manufactured continuously. The tapered angle α may be appropriately varied so as to be in a range of 0.3° or more and 10.0° or less at individual locations in the axial direction.

By applying the variety of tapered shapes as described above to the core die portion 9-1, it also becomes possible to facilitate centering alignment during the setting of the dies 10-1 and 10-2 to the steel pipe 6.

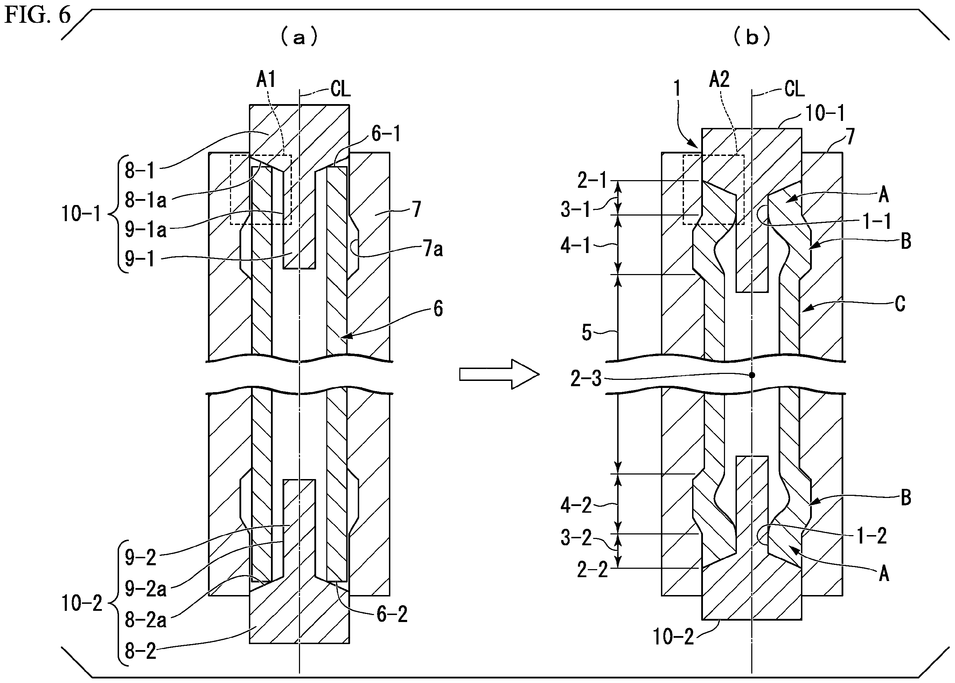

FIG. 6 is cross-sectional views illustrating another modification example of the pair of dies 10-1 and 10-2 illustrated in FIG. 1, FIG. 6(a) corresponds to FIG. 1(a), and FIG. 6(b) corresponds to FIG. 1(b).

In the present modification example, for a reason described below, the base portions 8-1 and 8-2 having a shape illustrated in FIG. 6 are employed. That is, the base portions 8-1 and 8-2 of the present modification example are inclined so that abutting portions 8-1a and 8-2a abutting the both end surfaces 6-1 and 6-2 of the steel pipe 6 in the axial direction retract further away from the center position along the central axis of the steel pipe 6 as the abutting portions run toward the outside in the radial-direction from the central axis of the steel pipe 6. In a case in which the abutting portions 8-1a and 8-2a have the above-described inclined shape, it is possible to facilitate centering alignment during the setting of the dies 10-1 and 10-2 to the steel pipe 6. That is, the abutting portions 8-la and 8-2a form a substantially conical surface, and thus it is possible to put the tapered front end portions into the pipe ends of the steel pipe 6, and centering alignment between the dies 10-1, 10-2 and the steel pipe 6 is facilitated.

Furthermore, when the abutting portions 8-1a and 8-2a are formed inclined as described above, compared with the case in which the abutting portions are not formed inclined (refer to FIG. 1(a) and FIG. 1(b)), a force in the pipe expansion direction is more effectively applied to portions that are formed as the swollen portions 4-1 and 4-2.

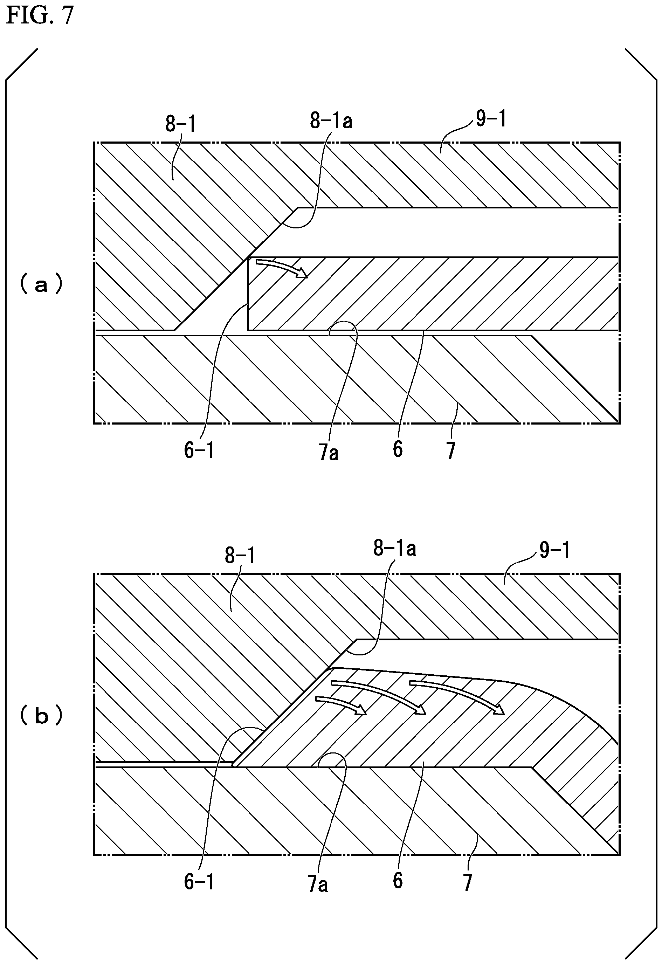

What has been described above will be specifically described using FIG. 7. First, when die forging is started, it is possible to first bring the abutting portion 8-1a (8-2a) into contact with the inner circumferential edge of the end portion of the steel pipe 6 as illustrated in FIG. 7(a). As a result, as illustrated in FIG. 7(b), it is possible to press and spread the inner circumferential edge of the end portion of the steel pipe 6 toward the position where becomes the swollen portion 4-1 (4-2), thereby sending the portion where becomes the swollen portion 4-1 (4-2) into a dimple in the inner surface shape 7a.

As described above, the inclination has a role of correctly guiding the flow of the material at the end portion of the steel pipe 6 so as to avoid buckling (the collapse of the swollen portions 4-1 and 4-2 to the inside in the radial direction). Therefore, even when a desired final product has, for example, large swollen portions 4-1 and 4-2 in the shape, it is possible to form the final product without causing buckling.

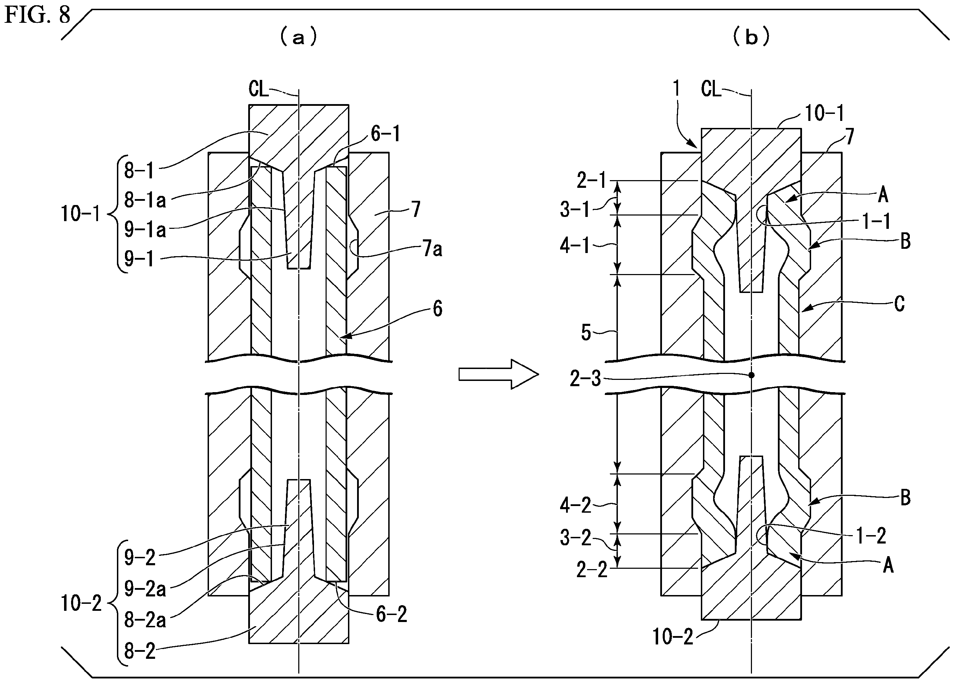

FIG. 8 is cross-sectional views illustrating still another modification example of the pair of dies 10-1 and 10-2 illustrated in FIG. 1, FIG. 8(a) corresponds to FIG. 1(a), and FIG. 8(b) corresponds to FIG. 1(b).

As illustrated in FIG. 8, in the present modification example, the dies 10-1 and 10-2 having a shape that satisfies both the core die portions 9-1 and 9-2 having the above-described tapered shape and the abutting portions 8-1a and 8-2a being formed inclined are employed. According to this modification example, it is possible to exhibit both the above-described effect of the core die portions 9-1 and 9-2 having the above-described taper shape and the above-described effect of the abutting portions 8-1a and 8-2a being formed inclined.

Meanwhile, in the present modification example, a flat circular shape is employed as the front end shapes of the core die portions 9-1 and 9-2, but the front end shapes are not limed only thereto, and shapes obtained by chamfer processing (at least one of C chamfering or R chamfering) as well as a hemispherical shape or a tapering tapered shape may also be employed. The above is also applicable to other modification examples and the above-described embodiments.

Hitherto, a variety of preferred aspects of the present invention have been described, but the present invention is not limited only to a variety of the aspects described above, and it is also possible to employ appropriately-modified configurations.

For example, in the variety aspects described above, the steel pipe 6 in which the material is steel has been described, but the material is not limited only to steel, and the present invention may be applied to hollow pipes of other plastically deformable materials.

In addition, in the modification example illustrated in FIG 6 and the like, the aspect in which the abutting portions 8-1a and 8-2a are inclined toward the outside of the steel pipe 6 as the abutting portions run toward the radial-direction from the center line of the steel pipe 6 has been described; however, the orientation of the inclination may be opposite depending on the desired shape of the power transmission system shaft 1. In this case, it becomes possible to accelerate the flow of the material so that the end portion inner surfaces of the steel pipe 6 make a close-contact with the core die portions 9-1 and 9-2.

In addition, as in the above-described embodiment of FIG. 1(a), it is necessary to accurately dispose the center line of the inner surface (the inner surface shape 7a) of the outer die 7 and the center line of the steel pipe 6 concentrically. In order for the above-described accurate disposition, it is also possible to employ, for example, the die 10-1 (10-2) illustrated in FIG. 9.

That is, by increasing the size of a botom portion (a portion that is connected to the base portion 8-1 or 8-2) of the core die portion 9-1 (9-2) as illustrated in FIG. 9, it becomes possible to accurately dispose the center lines concentrically. More specifically, the botom portion is provided with an outer diameter that is slightly larger than or substantially equal to the inner diameter of the steel pipe 6, and furthermore, a tapered surface 8x that tapers toward the front end of the core die portion 9-1 or 9-2 is formed. Then, by concentrically holding the inner diameter portion of the steel pipe 6 with the tapered surface 8x, it is possible to hold the steel pipe 6 concentrically.

In addition, in the variety of embodiments described above, the present invention has been applied to cold forging, but is not limited only thereto, and it is also possible to employ an aspect in which the steel pipe 6 is put into the outer die 7 that has been heated to, for example, 600°C in advance and is compressed using the dies 10-1 and 10-2. In this case, as the method for heating the steel pipe 6 in advance, it is possible to employ, for example, electrical heating.

In a case in which the steel pipe 6 is heated in advance as described above, even in a case in which the material strength of the steel pipe 6 is high, it becomes possible to reliably deform the steel pipe with a small compressive force and thus obtain a desired product shape.

The outline of the methods for manufacturing a tubular member according to the variety aspects described above will be summarized below.
(1) The present method for manufacturing a tubular member is a method for manufacturing a tubular member (the power transmission system shaft 1) having the thickened portions 3-1 and 3-2, the swollen portions 4-1 and 4-2 having a larger outer diameter than the thickened portions 3-1 and 3-2, and the center portion 5 having a smaller outer diameter than the swollen portions 4-1 and 4-2 from both end portions in an axial direction toward a central location in the axial direction. The method includes: a step of disposing the steel pipe 6 which is a material in the outer die 7 having an inner surface having the same shape as an outer form of the tubular member (the power transmission system shaft 1) with at least a part of the steel pipe 6 being separated from the inner surface; and a step of compressing the steel pipe 6 in the axial direction by reducing the relative distance between a pair of the base portions 8-1 and 8-2 that respectively abut both end surfaces of the steel pipe 6 in the axial direction in a state in which the core die portions 9-1 and 9-2 having an outer surface shape that is the same as inner surface shapes of the both end portions of the tubular member (the power transmission system shaft 1) in the axial direction is inserted between the pair of the base portions 8-1 and 8-2 with at least a part of the core die portions 9-1 and 9-2 being separated from the inner surface of the steel pipe 6. Meanwhile, in the compression step, both the pair of base portions 8-1 and 8-2 may be brought close to each other or any one of the pair of base portions 8-1 and 8-2 may be fixed, and the other base portion may be brought close to the fixed base portion.
(2) In (1), the core die portions 9-1 and 9-2 may have an outer diameter that decreases toward a front end thereof.
(3) In the case of (2), the outer diameter of the core die portions 9-1 and 9-2 may vary stepwise or continuously in synchronization with thicknesses of the thickened portions 3-1 and 3-2.
(4) In any one of (1) to (3), the abutting portions with the both end surfaces of the steel pipe 6 in the axial direction in the base portions 8-1a and 8-2a of the core die portions 9-1 and 9-2 may be formed inclined toward the outside of the steel pipe 6.
(5) In any one of (1) to (4), the tubular member may be the automobile power transmission system shaft 1.
(6) In the case of (5), the power transmission system shaft 1 may be a drive shaft, a propeller shaft, or a power transmission system shaft that is connected to right and left drive shafts.

### [Industrial Applicability]

According to the embodiments and the variety of modification examples described above, it is possible to manufacture, for example, drive shafts, propeller shafts, and, furthermore, tubular power transmission system shafts that are connected to right and left drive shafts using a single step of die forging at a low cost.

### [Brief Description of the Reference Symbols]

1 POWER TRANSMISSION SYSTEM SHAFT (TUBULAR MEMBER)
1-1,1-2 BOTH END PORTIONS
3-1,3-2 THICKENED PORTION
4-1,4-2 SWOLLEN PORTION
5 CENTER PORTION
6 STEEL PIPE
6-1, 6-2 BOTH END SURFACES
7 OUTER DIE
7a INNER SURFACE SHAPE
8-1,8-2 BASE PORTION (PRESSURIZING DIE)
8-1 a, 8-2a ABUTTING PORTION
9-1,9-2 CORE DIE PORTION

## Claims

1. A method for manufacturing a tubular member having thickened portions, swollen portions having a larger outer diameter than the thickened portions, and a center portion having a smaller outer diameter than the swollen portions, from both end portions in an axial direction toward a central location in the axial direction, the method comprising:
disposing a steel pipe which is a material in an outer die having an inner surface having the same shape as an outer form of the tubular member with at least a part of the steel pipe being separated from the inner surface; and
compressing the steel pipe in the axial direction by decreasing a relative distance between a pair of pressurizing dies that respectively abut both end surfaces of the steel pipe in the axial direction in a state where a core die portion having an outer surface shape that is the same as inner surface shapes of the both end portions of the tubular member in the axial direction is inserted between the pair of pressurizing dies with at least a part of the core die portion being separated from the inner surface of the steel pipe.

2. The method for manufacturing a tubular member according to Claim 1,
wherein the core die portion has an outer diameter that decreases toward a front end thereof.

3. The method for manufacturing a tubular member according to Claim 2,
wherein the outer diameter of the core die portion varies stepwise or continuously.

4. The method for manufacturing a tubular member according to any one of Claims I to 3,
wherein abutting portions with the both end surfaces of the steel pipe in the axial direction of the pair of pressurizing dies are inclined toward an outside of the steel pipe.

5. The method for manufacturing a tubular member according to any one of Claims 1 to 4,
wherein the tubular member is an automobile power transmission system shaft.

6. The method for manufacturing a tubular member according to Claim 5,
wherein the power transmission system shaft is a drive shaft, a propeller shaft, or a power transmission system shaft that is connected to right and left drive shafts.
